# EUROPÄISCHE PATENTANMELDUNG

(11) **EP 3 418 735 A1**
(43) Veröffentlichungstag der Anmeldung: **26.12.2018**
(21) Anmeldenummer: 17177656.0
(22) Anmeldetag: 23.06.2017
(51) Int. Cl.: G01N 29/04, B06B 1/06, G01N 29/34, G01N 29/42, G01N 29/44

(54) **VERFAHREN UND VORRICHTUNG ZUR BREITBANDMESSUNG MIT MULTIELEMENT-LUFTULTRASCHALLSCHALLWANDLERN**

(71) Anmelder: Sonotec Ultraschallsensorik Halle GmbH, 06112 Halle / Saale (DE)
(72) Erfinder: BODI, Andreas, 06295 Lutherstadt Eisleben (DE); STEINHAUSEN, Ralf, 06108 Halle (Saale) (DE); KIEL, Mario, 06388 Edderitz (DE)
(74) Vertreter: Maikowski & Ninnemann Patentanwälte Partnerschaft mbB

(57) **Zusammenfassung**

Die Erfindung liegt auf dem Gebiet der zerstörungsfreien Prüfung, insbesondere auf dem Gebiet der Prüfung mittels Ultraschall und betrifft eine Vorrichtung und ein Verfahren für die luftgekoppelte Ultraschallprüfung. Die Vorrichtung für die luftgekoppelte Ultraschallprüfung umfasst ein Ultraschallsystem (20), insbesondere Luftultraschallsystem, das einen Ultraschallwandler, Sende-Empfangselektronik mit Digitalisierer (27) und eine Recheneinheit (28) mit Ansteuer- und Auswertesoftware aufweist, wobei der Ultraschallwandler ein Multielementultraschallwandler (10) ist und mindestens zwei Sendeelementen und/oder Empfangselementen (11, 12, 13) aufweist, dadurch gekennzeichnet, dass die Sendeelemente und/oder Empfangselemente (11, 12, 13) so gestaltet sind, dass sie mit unterschiedlichen Frequenzen ansteuerbar sind. Die Erfindung betrifft weiterhin die Verwendung des Verfahrens oder des Ultraschallsystems zur Oberflächencharakterisierung und/oder zur Prüfung von Kompositmaterialien, Klebeverbindungen und Materialverbunden auf Fehler, wie Lufteinschlüsse, Delaminationen, Klebefehler, Verunreinigungen, Kanäle, Risse und Kissing Bonds.

## Beschreibung

### Gebiet der Erfindung

Die Erfindung liegt auf dem Gebiet der zerstörungsfreien Prüfung, insbesondere auf dem Gebiet der Prüfung mittels Ultraschall und betrifft ein Ultraschallsystem und ein Verfahren für die luftgekoppelte Ultraschallprüfung. Die Erfindung betrifft weiterhin die Verwendung des Verfahrens oder des Ultraschallsystems zur Oberflächencharakterisierung und/oder zur Prüfung von Kompositmaterialien, Klebeverbindungen und Materialverbunden auf Fehler, wie Lufteinschlüsse, Delaminationen, Klebefehler, Verunreinigungen, Kanäle, Risse und Kissing Bonds. Des Weiteren stellt die Erfindung einen speziellen Multielementultraschallwandler und Computerprogrammprodukte für die Ansteuerung des Multielementultraschallwandlers und die Auswertung von Luftultraschallmessungen bereit.

### Hintergrund der Erfindung

Für die Prüfung von Kompositverklebungen müssen aufgrund der Vielzahl von auftretenden Fehlern (Lufteinschlüsse, Delaminationen, Klebefehler, Verunreinigungen, Kanäle, Risse, Kissing Bonds) unterschiedliche Messverfahren eingesetzt werden. Dies erhöht den Prüfaufwand erheblich. Zudem ist bislang kein Verfahren bekannt, welches sog. Kissing Bonds an Faser-Verbund-Werkstoffen sicher detektieren kann. Es sind Verfahren zur Prüfung von Metallverbunden bekannt, jedoch sind diese Verfahren nicht auf die Faserverbundwerkstoffe übertragbar.

Durch die große Vielfalt an auftretenden Fehlern sind die Anforderungen an die Messaufgabe sehr vielfältig. Aufgrund der unterschiedlichen lateralen und axialen Ausdehnungen der Fehler sowie unterschiedlichem Dämpfungsverhalten ist es notwendig, so breitbandig wie nur möglich zu messen. Aktuelle Luftultraschallprüfköpfe sind Aufgrund der notwendigen hohen Empfindlichkeit schmalbandig ausgeführt. Bandbreiten, wie sie in der Tauchtechnik oder Kontakttechnikmessung umgesetzt werden, sind im Bereich der Luftultraschallprüfung aktuell nicht einsetzbar. Während bei Kontakt- bzw. Tauchtechnikmessungen Bandbreiten von 80-100% gängig sind, wird im Bereich der Luftultraschallprüfung mit Bandbreiten unter 30% gearbeitet. Um die beschriebenen Fehler sicher erfassen zu können, reichen diese Bandbreiten jedoch nicht aus. Um die Vielzahl der möglichen Fehler detektieren zu können, ist es notwendig, die Probe bzw. den Prüfling mit mehreren Frequenzen zu untersuchen. Der dadurch entstehende Mehraufwand ist erheblich und führt oftmals zum Verwerfen des Prüfverfahrens.

Anwender nehmen die mit Tauch- und Kontakttechnik verbundenen Nachteile der Kontamination des Prüflings mit Koppelmittel in Kauf oder verzichten auf die aufwendige Flächenprüfung mit Ultraschall.

Es sind außerdem Verfahren bekannt, die durch Anregung mit variierten Frequenzen und Amplituden (Sweep, Chirp) versuchen, die Bandbreite von Ultraschallwandlern zu erhöhen. Diese Verfahren haben aber den erheblichen Nachteil, dass neben der deutlich begrenzten Erhöhung der Bandbreite die Impulslänge um ein vielfaches vergrößert wird. Bei vielen Messanwendungen ist jedoch ein möglichst kurzer Impuls notwendig. Die Messung mit Einzelimpulsen, wie es in der Kontakt- und Tauchtechnik der Fall ist, findet Aufgrund der hohen Ultraschalldämpfung bei der Luftultraschallmessung derzeit nur kleine Einsatzfelder.

DE 102013110900 A1 beschreibt einen Ultraschallwandler für die luftgekoppelte Prüfung unter Verwendung von Elektretfolien als aktives Material, einerseits zur Schallerzeugung und andererseits zur akustischen Anpassung auf das Übertragungsmedium Luft. DE 102013110900 A1 offenbart jedoch keine Möglichkeiten der Bandbreitenvergrößerung durch gezielte unterschiedliche Frequenzansteuerung einzelner Elemente eines Multielementultraschallwandlers.

### Beschreibung der Erfindung

Die Aufgabe der Erfindung besteht darin, die Nachteile des Standes der Technik zu überwinden und ein Ultraschallsystem und ein Verfahren bereitzustellen, die speziell an die Luftultraschallprüfung angepasst und für die Prüfung von Kompositmaterialien und Verbunden auf Fehler, wie Lufteinschlüsse, Delaminationen, Klebefehler, Verunreinigungen, Kanäle, Risse, Kissing Bonds usw. geeignet sind.

Die vorliegende Erfindung betrifft die luftgekoppelte Ultraschallprüfung mit Luft als Koppelmittel. Dabei ergibt sich ein besonderes technisches Problem: Bei klassischen Ultraschallprüfköpfen wird das Ultraschallsignal an der Grenzfläche von Prüfkopf zu Luft nahezu vollständig reflektiert. Nur ein sehr geringer Teil des Signals kann den Prüfkopf verlassen bzw. von ihm empfangen werden. Entsprechend hoch sind die Verluste durch Reflexion beim Passieren der Grenzflächen. Hervorzuheben ist, dass bei der luftgekoppelten Ultraschall-Prüfung mindestens vier Grenzflächen zu überwinden sind, wodurch sich eine beträchtliche Signaldämpfung ergibt. Unter einer Grenzfläche wird in diesem Zusammenhang der Kontaktbereich zwischen Luft oder einem anderen Gas oder Gasgemisch und einem Feststoff verstanden. Dieser Feststoff kann beispielsweise die Oberfläche des Prüfkörpers oder die Oberfläche des Ultraschallwandlers sein.

Die Aufgabe der Erfindung wird gelöst durch ein Ultraschallsystem, insbesondere ein Luftultraschallsystem, das einen Ultraschallwandler als Sender und einen Ultraschallwandler als Empfänger, Sende-Empfangselektronik mit Digitalisierer und eine Recheneinheit mit Ansteuer- und Auswertesoftware aufweist, wobei die Ultraschallwandler Multielementultraschallwandler sind und jeweils mindestens zwei Sendeelemente und/oder Empfangselemente aufweisen, dadurch gekennzeichnet, dass die Sendeelemente und/oder Empfangselemente so gestaltet sind, dass sie mit unterschiedlichen Frequenzen ansteuerbar sind. In einer bevorzugten Ausführungsform werden die Elemente des Sendewandlers und/oder die Elemente des Empfangswandlers mit unterschiedlichen Frequenzen angesteuert.

Kernstück der Erfindung bildet der Ultraschallwandler, der aus mehreren Sendeelementen und/oder Empfangselementen besteht. Unter einem Ultraschallwandler wird insbesondere ein Signalwandler verstanden, der akustische Schwingungen in elektronische bzw. elektrische Signale wandelt und/oder umgekehrt. Der hier beschriebene Wandler kann sowohl elektrische Signale in akustische Signale umwandeln, als auch akustische in elektrische Signale.

Vorzugsweise weist der Ultraschallwandler 2, 3, 4, 5 oder mehr Sendeelemente und/oder Empfangselemente auf. Besonders bevorzugt ist es, wenn der Ultraschallwandler gemäß der Erfindung drei oder vier Sendeelemente und/oder Empfangselemente aufweist, wobei die Sendeelemente und/oder Empfangselemente mit unterschiedlichen Frequenzen ansteuerbar sind bzw. angesteuert werden.. Durch Überlagerung der Schallfelder der Sendeelemente ergibt sich ein Summensignal. Bei der herkömmlich eingesetzten Phased Array Technologie werden die Einzelelemente (des Sendewandlers) phasenversetzt angesteuert. Das Summensignal kann durch diese Art der Anregung räumlich gesteuert werden. Die für die Prüfung von Kompositmaterialien sowie Verbunden auf Fehler notwendige Erhöhung der Bandbreite ist jedoch nicht möglich. Die erfindungsgemäße Vorrichtung, insbesondere der erfindungsgemäße Ultraschallwandler hat den Vorteil, dass durch Ansteuern der Sendeelemente und/oder Empfangselemente mit unterschiedlichen Frequenzen eine deutliche Erhöhung der Bandbreite des Messsignals ermöglicht wird.

Die Erfindung betrifft deshalb auch einen Multielementultraschallwandler, der mindestens zwei Sendeelemente und/oder Empfangselemente, vorzugsweise drei oder vier Sendeelemente und/oder Empfangselemente aufweist, dadurch gekennzeichnet, dass die Sendeelemente und/oder Empfangselemente so gestaltet sind, dass sie mit unterschiedlichen Frequenzen ansteuerbar sind bzw. angesteuert werden.

Die räumliche Ausbreitung des Ultraschalls und die Homogenität des Schallfeldes werden maßgeblich durch die Form der Einzelelemente beeinflusst. Grundsätzlich können die Einzelelemente des erfindungsgemäßen Multielementultraschallwandlers jede mögliche Form aufweisen. Bevorzugt ist es jedoch, wenn die Sendeelemente und/oder Empfangselemente des Multielementultraschallwandlers ringförmig oder kreisförmig gestaltet sind. Dies hat den Vorteil, dass mit ringförmigen Wandlern ein Schallfeld erzeugt werden kann, dass sich mindestens in zwei Dimensionen homogen im Raum ausbreitet. Demgegenüber ist es mit einem linearen Array nur möglich, Schallfelder zu erzeugen, die sich nur in einer Dimension homogen ausbreiten.

Die Frequenz wird maßgeblich durch die Geometrie der Einzelelemente bestimmt. Die "Geometrie der Einzelelemente" im Sinne der Erfindung zielt auf die räumliche Gestalt der Einzelelemente, wie Breite, Dicke (Höhe) und Länge oder Durchmesser, ab. Die Einzelelemente sind deshalb vorzugsweise an die anzuregende Frequenz anpassbar. Insbesondere durch Variation der Dicke der Einzelelemente kann deren Frequenz variiert werden. Durch die Verwendung an sich bekannter Kompositmaterialien aus der Ultraschalltechnik ist die Variation der Dicke der Einzelelemente, und damit der Frequenz, möglich. In einer Ausführungsform der Erfindung können alle Einzelelemente des Multielementultraschallwandlers aus dem gleichen Kompositmaterial bestehen. In einer anderen Ausführungsform der Erfindung können die Einzelelemente des Multielementultraschallwandlers gemäß der Erfindung aus unterschiedlichen Kompositmaterialien bestehen. In einer weiteren Ausführungsform der Erfindung können die Sendeelemente des Multielementultraschallwandlers aus dem gleichen Kompositmaterial, und die Empfangselemente des Multielementultraschallwandlers aus einem anderen Kompositmaterial bestehen.

Die Sendeelemente und/oder Empfangselemente des Multielementultraschallwandlers gemäß der Erfindung bestehen üblicherweise aus piezoelektrischen Materialien. Die piezoelektrischen Materialien sind beispielsweise ausgewählt aus Einkristallen (Quarz, PMN-PT, PbTiO₃, BaTiO₃) und polykristallinen Keramiken (z.B. PZT, Bleimetaniobat). Diese werden als Volumenschwinger (Scheiben, Ringe, Zylinder) oder als Schichten auf Substraten verwendet. In den letzten Jahren haben neue Materialien wie piezoelektrische Folien (PVDF) und Keramik-Polymer-Komposite das Spektrum der Ultraschallprüfköpfe erheblich erweitert. Auch diese neuen Materialien sind für die Herstellung des Multielementultraschallwandlers gemäß der Erfindung geeignet.

In einer bevorzugten Ausführungsform der Erfindung weist die Sendeelektronik einen Signalprozessor, einen digitalen Verstärker und einen Sendewandler auf. In einer weiteren bevorzugten Ausführungsform der Erfindung weist die Empfangselektronik einen Empfangswandler, einen Vorverstärker, einen Verstärker und einen analog-/digital (a/d)-Wandler auf.

Die Bestandteile der Sendeelektronik und der Empfangselektronik sind dem Fachmann bekannt. Geeignet zur Verwendung im Ultraschallsystem gemäß der Erfindung sind konventionell erhältliche Signalprozessoren, digitale Verstärker, Sendewandler, Empfangswandler, Vorverstärker und analog-/digital (a/d)-Wandler.

In einer besonders bevorzugten Ausführungsform der Erfindung ist die Sendeelektronik mehrkanalig und die Empfangselektronik mehrkanalig, wobei Sende- und Empfangselektronik mindestens so viele Kanäle aufweisen wie der Ultraschallwandler. Vorzugsweise weisen der Multikanalsender und der Multikanalempfänger 2, 3, 4, 5 oder mehr Sendeelemente und/oder Empfangselemente auf. Besonders bevorzugt ist es, wenn der Multikanalsender und der Multikanalempfänger drei oder vier Sendeelemente und/oder Empfangselemente aufweisen.

Die Sendeelemente des Multielementultraschallwandlers senden typischerweise Ultraschallsignale mit verschiedenen Frequenzen im Bereich von 20 kHz und 10 MHz aus. Vorzugsweise senden die Sendeelemente des Multielementultraschallwandlers Ultraschallsignale mit verschiedenen Frequenzen im Bereich von 50 kHz bis 500 kHz, besonders bevorzugt im Bereich von 100 kHz bis 250 kHz aus. Alternativ ist auch die Messung von Einzelwerten bei nur einer Frequenz möglich.

In einer weiteren besonders bevorzugten Ausführungsform weist das Ultraschallsystem einen Ultraschallwandler auf, der aus 3 ringförmigen Einzelelementen besteht, wobei das erste Element Ultraschallsignale mit einer Frequenz von 150 kHz, das zweite Element Ultraschallsignale mit einer Frequenz von 200 kHz und das dritte Element Ultraschallsignale mit einer Frequenz von 250 kHz aussendet.

Die Anordnung der Sendewandler und der Empfangswandler kann unterschiedlich sein. In einer Ausführungsform sind in dem erfindungsgemäßen Ultraschallsystem Sendewandler und Empfangswandler in einem Prüfkopf enthalten. Dies ermöglicht die Durchführung der Ultraschallprüfung mit dem erfindungsgemäßen Ultraschallsystem im Reflexionsbetrieb. In einer anderen, gleichermaßen bevorzugten Ausführungsform sind in dem erfindungsgemäßen Ultraschallsystem Sendewandler und Empfangswandler getrennt voneinander als separate Prüfköpfe ausgeführt. Dies ermöglicht die Durchführung der Ultraschallprüfung mit dem erfindungsgemäßen Ultraschallsystem im Durchschallungsbetrieb oder in der Pitch-Catch-Konfiguration.

Zur Ansteuerung des erfindungsgemäßen Ultraschallwandlers ist eine spezielle Sende-Empfangselektronik notwendig. Da die einzelnen Schwingerelemente des Multielementultraschallwandlers parallel angesteuert werden müssen, muss das Ultraschallsystem mindestens genauso viele Kanäle haben, wie der Ultraschallwandler selbst. In einer besonders bevorzugten Ausführungsform der Erfindung ist der Multikanalsender so gestaltet, dass mit einer sehr hohen zeitlichen Genauigkeit alle Kanäle synchron bzw. phasengleich ansteuerbar sind, wobei jeder Kanal mit einer anderen Frequenz ansteuerbar ist. Phasengleiches Ansteuern bedeutet das erstmalige, synchrone Anregen der Sendeelemente des Multielementultraschallwandlers. Empfangsseitig werden die Signale vom Ultraschallwandler analog vorverarbeitet, verstärkt und digitalisiert. Toleranzen in der Empfangselektronik können mit Hilfe von Kalibriermessungen bestimmt und in der Software der Recheneinheit korrigiert werden.

In einer weiteren besonders bevorzugten Ausführungsform weist das Ultraschallsystem gemäß der Erfindung eine Kombination des Multielementultraschallwandlers mit dem Multikanalsender und dem Multikanalempfänger auf, die so gestaltet ist, dass die Vergrößerung der Bandbreite des Ultraschallsignals und dadurch die Durchführung einer einzigen Messung ermöglicht wird. In einer besonders geeigneten Ausführungsform nutzt das erfindungsgemäße Ultraschallsystem in vorteilhafter Weise gezielt eine ringförmige Elektrodenstruktur, und zwar nicht nur zur Formung des Schallfeldes, sondern außerdem zur Bandbreitenvergrößerung durch gezielte unterschiedliche Frequenzansteuerung der einzelnen Elektroden. Dies unterscheidet sich grundlegend von konventionellen Systemen. Vorzugsweise werden Piezokompositwandler verwendet, bei denen die Zwischenräume zwischen den einzelnen Elektroden beispielsweise mit einem in der Ultraschalltechnik üblichen Kunststoff ausgegossen sind. Dies unterscheidet sich grundlegend von konventionellen Systemen.

Vorzugsweise ist die Sende- und die Empfangselektronik mit einer Recheneinheit verbunden. Als Recheneinheit ist jede bekannte Datenverarbeitungsanlage geeignet, wie z.B. ein PC, Laptop-Computer, Tablet-PC, Mobiltelefon, ein spezielles Steuergerät usw. Die Recheneinheit wirkt hierzu über eine Kommunikationsverbindung, beispielsweise kabelgebunden wie über eine serielle oder parallele Schnittstelle, USB-Verbindung, Mini-USB-Verbindung; oder WLAN-Verbindung oder Bluetooth-Verbindung, mit der Sende- und Empfangselektronik zusammen.

Die Ansteuer- und Auswertesoftware sind an sich konventionelle Lösungen, weisen jedoch Besonderheiten gemäß dem erfindungsgemäßen Ultraschallsystem und dem nachfolgend beschriebenen Verfahren auf, insbesondere betreffend die Ansteuerung der Einzelelemente des Multielementultraschallwandlers mit verschiedenen Frequenzen und die Bildung des Summenspektrums aus den Einzelspektren der Einzelelemente des Multielementultraschallwandlers bei der Auswertung der Ultraschallmessungen.

Die Erfindung stellt deshalb auch ein Computerprogrammprodukt zur Ansteuerung der Einzelelemente des Multielementultraschallwandlers mit verschiedenen Frequenzen bereit. In einer weiteren Ausführungsform stellt die Erfindung ein Computerprogrammprodukt zur Auswertung von Luftultraschallmessungen über einen großen Frequenzbereich, vorzugsweise über mindestens 80 % des Ultraschallfrequenzbereiches, insbesondere durch Bildung des Summenspektrums aus den Einzelspektren der Einzelelemente des erfindungsgemäßen Multielementultraschallwandlers bereit.

Die Erfindung stellt weiterhin ein Verfahren zur Breitbandmessung von Prüfkörpern mit Multielementultraschallschallwandlern, insbesondere Multielement-Luftultraschallschallwandlern, bereit, wobei in dem Verfahren das zuvor beschriebene Ultraschallsystem verwendet wird.

Die zuvor beschriebenen Vorteile und vorteilhaften Ausführungsformen für das erfindungsgemäße Ultraschallsystem und den erfindungsgemäßen Multielementultraschallwandler gelten gleichermaßen für das nachfolgend beschriebene Verfahren, so dass auf das zuvor genannte Bezug genommen wird.

In einer bevorzugten Ausführungsform weist das Verfahren die Schritte auf:
- Ansteuern der Sendeelemente des Multielementultraschallwandlers mit unterschiedlichen Frequenzen;
- Aussenden eines breitbandigen Ultraschallsignals durch die Sendeelemente des Multielementultraschallwandlers;
- Empfangen/Messen des breitbandigen Ultraschallsignals durch die Empfangselemente des Multielementultraschallwandlers und Bildung von Einzelspektren;
- Analoge Vorverarbeitung, Verstärkung und Digitalisierung der von den Empfangselementen des Multielementultraschallwandlers empfangenen Ultraschallsignale; und
- Auswertung der empfangenen Ultraschallsignale.

Mittels analoger Vorverarbeitung, Verstärkung und Digitalisierung der von den Empfangselementen des Multielementultraschallwandlers empfangenen Ultraschallsignale wird ein Spektrum gebildet, das sich aus der Summe der überlagerten Einzelspektren ergibt. Durch die Anzahl der Einzelelemente und deren Frequenzabstufung kann die Form des Spektrums entsprechend beeinflusst werden. Es gelten die Gesetzmäßigkeiten des Fouriertheorems, die dem Fachmann bekannt sind. Toleranzen in der Empfangselektronik können mit Hilfe von Kalibriermessungen bestimmt und in der Software der Recheneinheit korrigiert werden.

Die Auswertung der Spektren erfolgt unter Ausnutzung dispersiver Eigenschaften der zu untersuchenden Prüflinge in Bezug auf die Wechselwirkung mit Ultraschall. Dabei tragen sowohl Materialeigenschaften, wie zum Beispiel frequenzabhängige Dämpfung, als auch Geometrieeigenschaften, wie zum Beispiel frequenzabhängiges Streuverhalten an Grenzflächen zur Veränderung des gemessenen Ultraschallsignals bei. Materialeigenschaften und Oberflächenstruktur der Prüflinge beeinflussen das Messsignal. Beispielsweise ist das von Materialoberflächen reflektierte Signal viel höher als das aus dem Material reflektierte Signal. Mit dem erfindungsgemäßen Verfahren und Ultraschallsystem ist es möglich, sowohl oberflächenbedingte Einflüsse des Messsignals als auch die Überlagerung des eigentlichen zu messenden Signals (von Oberfläche oder aus Material) zu unterdrücken bzw. zu entfernen.

Dadurch ist es möglich, neuartige Kontrastmechanismen, zum Beispiel durch Korrelationsverfahren zwischen Messungen unterschiedlicher Frequenzen, zu erreichen. Die Vergrößerung der effektiven Bandbreite durch den kombinierten Einsatz der Multielementultraschallwandler und dem Multikanal-Messsystem ermöglicht dabei die Durchführung einer einzigen Messung. Dies eliminiert insbesondere den Einfluss der Wandlermontage bei ähnlich durchgeführten Analysen unter Verwendung von mehreren Messungen mit unterschiedlichen Messfrequenzen.

Alternativ kann das erfindungsgemäße Verfahren noch einen Schritt der Fehlerklassifizierung umfassen, wobei mittels der Fehlerklassifizierung die Art und die Schwere des Materialfehlers erkannt werden.

Das erfindungsgemäße Verfahren und Ultraschallsystem eignen sich zur Breitbandmessung von Fügeverbindungen, Kompositmaterialien und Materialverbunden in verschiedenen Bereichen. Besonders geeignet sind das erfindungsgemäße Verfahren und Ultraschallsystem bei der Prüfung von Fügeverbindungen unterschiedlicher Materialarten, wie beispielsweise im Leichtbau. Hier ist es möglich, schwer detektierbare Delaminationen (Weak oder Kissing Bonds) zu detektieren. Besondere Vorteile haben das erfindungsgemäße Verfahren und Ultraschallsystem auch bei der Prüfung von Fehlern in Sandwichstrukturen. Hier ist es möglich, Fehler bei Materialkombinationen unterschiedlicher Klassen (z.B. Blech und Klebstoff) zu detektieren. Allgemein gut geeignet sind das erfindungsgemäße Verfahren und Ultraschallsystem bei der Prüfung von Fehlern in Klebeverbindungen wegen der dispersiven Eigenschaften der Klebstoffe. Letztlich sind das erfindungsgemäße Verfahren und Ultraschallsystem auch vorteilhaft gegenüber konventionellen Systemen bei der Oberflächencharakterisierung von Werkstoffen und werden beispielsweise verwendet zur Prüfung und Unterscheidung der Oberflächengüte und zur Unterscheidung zwischen Oberflächen- und Volumenungänzen. In Kompositmaterialien sowie Materialverbunden können mit dem erfindungsgemäßen Verfahren und Ultraschallsystem Fehler wie Lufteinschlüsse, Delaminationen, Klebefehler, Verunreinigungen, Kanäle, Risse und Kissing Bonds detektiert werden.

Die Erfindung wird nachfolgend anhand von 5 Zeichnungen näher erläutert.

Es zeigen:
**Figur 1****:** einen Multielementultraschallwandler;
**Figur 2****:** die Ermittlung des Summenspektrums gemäß der Erfindung;
**Figur 3****:** eine Ausführungsform des prinzipiellen Aufbaus des erfindungsgemäßen Ultraschallsystems für Durchschallbetrieb; und
**Figur 4****:** eine Ausführungsform des prinzipiellen Aufbaus des erfindungsgemäßen Ultraschallsystems in der Pitch-Catch-Konfiguration.
**Figur 5****:** eine Ausführungsform des prinzipiellen Aufbaus des erfindungsgemäßen Ultraschallsystems für Reflexionsbetrieb.

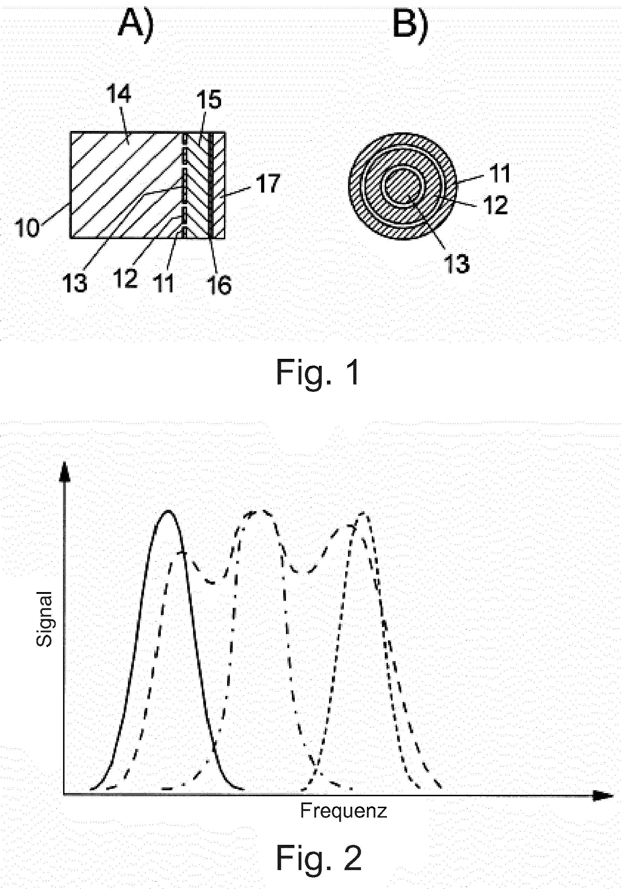

Der in **Figur 1** gezeigte Multielementultraschallwandler 10 weist beispielhaft drei ringförmige Elektroden 11, 12 und 13 auf. Figur 1A zeigt einen Querschnitt des Multielementultraschallwandlers 10. Der Multielementultraschallwandler 10 weist weiterhin einen Dämpfungskörper 14, piezoelektrisches Material 15, die Elektrode 16 und eine Anpassschicht 17 auf. Figur 1B zeigt die Elektrodenstruktur (Struktur der Einzelelemente) des Multielementultraschallwandlers 10 in Frontansicht. Die Anregung der Einzelelemente 11, 12 und 13 kann beispielsweise mit folgenden Frequenzen erfolgen:

| | |
|---|---|
| Elektrode 11: | 150 kHz |
| Elektrode 12: | 200 kHz |
| Elektrode 13: | 250 kHz. |

Durch die Anzahl der Elemente und die Frequenzabstufung kann die Form des Spektrums entsprechend beeinflusst werden. Es gelten die Gesetzmäßigkeiten des Fouriertheorems. Das daraus resultierende Spektrum ergibt sich aus der Summe der überlagerten Einzelspektren. **Figur 2** zeigt eine Prinzipskizze der Ermittlung des Summenspektrums aus der Überlagerung von drei Einzelspektren, die beispielsweise mit Hilfe des in Figur 1 gezeigten Multielementultraschallwandlers erzeugt wurden, wobei das Spektrum A von einem ersten Ultraschallwandler, das Spektrum B von einem zweiten Ultraschallwandler und das Spektrum C von einem dritten Ultraschallwandler erzeugt wurden. Spektrum D zeigt das aus den Einzelspektren A, B und C ermittelte Summenspektrum. Dabei wurden die Sendeelemente des Multielementultraschallwandlers mit unterschiedlichen Frequenzen angeregt, wodurch die Sendeelemente des Multielementultraschallwandlers ein breitbandiges Ultraschallsignal im Bereich von 150 kHz bis 250 kHz aussendeten. Das breitbandige Ultraschallsignal wurde von den Empfangselementen des Multielementultraschallwandlers empfangen und es wurden die Einzelspektren A, B und C gebildet. Anschließend erfolgte die analoge Vorverarbeitung, Verstärkung und Digitalisierung der von den Empfangselementen des Multielementultraschallwandlers empfangenen Ultraschallsignale und die Bildung des Summenspektrums D aus den Einzelspektren A, B und C.

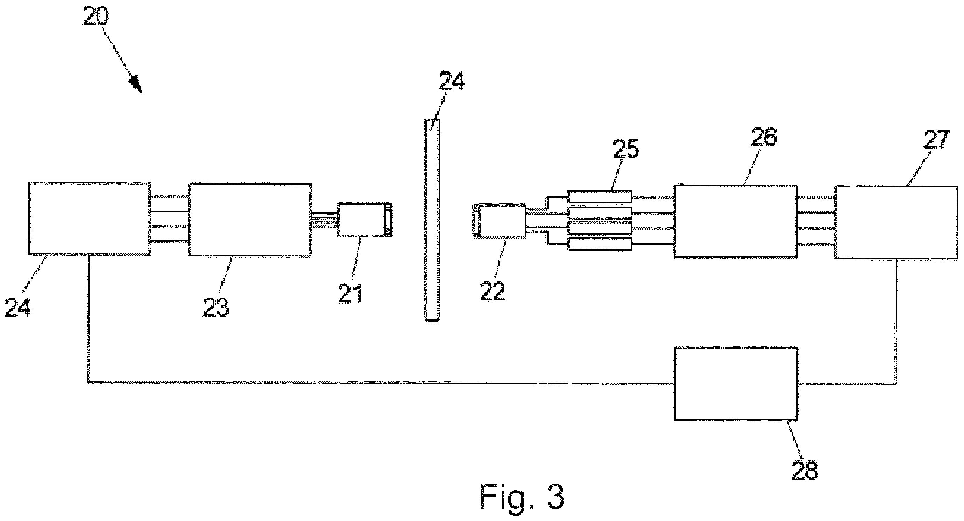

**Figur 3** zeigt den prinzipiellen Aufbau des Ultraschallsystems 20 gemäß der Erfindung mit Sende- und Empfangselektronik. Die Sendeelektronik weist einen Signalprozessor 24, einen Digitalverstärker 23 und einen Multikanalsender 21 auf. Die Empfangselektronik weist einen Multikanalempfänger 22, einen Vorverstärker 25, einen Verstärker 26 und einen Analog-Digital-Wandler 27 auf. Gezeigt ist weiterhin die Recheneinheit mit zentraler Prozessoreinheit (CPU) 28. Die hier gezeigte Ausführungsform wird für die Untersuchung von Prüflingen im Durchschallungsbetrieb benutzt, da sich Multikanalsender 21 und Multikanalempfänger 22 auf verschiedenen Seiten des Prüflings 29 befinden. In der gezeigten Ausführungsform verfügt das Ultraschallsystem über vier Kanäle. Empfangsseitig werden die Signale vom Ultraschallwandler analog vorverarbeitet, verstärkt und digitalisiert. Toleranzen in der Empfangselektronik können mit Hilfe von Kalibriermessungen bestimmt und in der Software der Recheneinheit 28 korrigiert werden. Die Vergrößerung der effektiven Bandbreite durch den kombinierten Einsatz der Multielementultraschallwandler und dem Mehrkanal-Messsystem ermöglicht die Durchführung einer einzigen Messung. Dies eliminiert insbesondere den Einfluss der Wandlermontage bei einer ähnlich durchgeführten Analyse unter Verwendung von mehreren Messungen mit unterschiedlichen Messfrequenzen und Einzelwandlern.

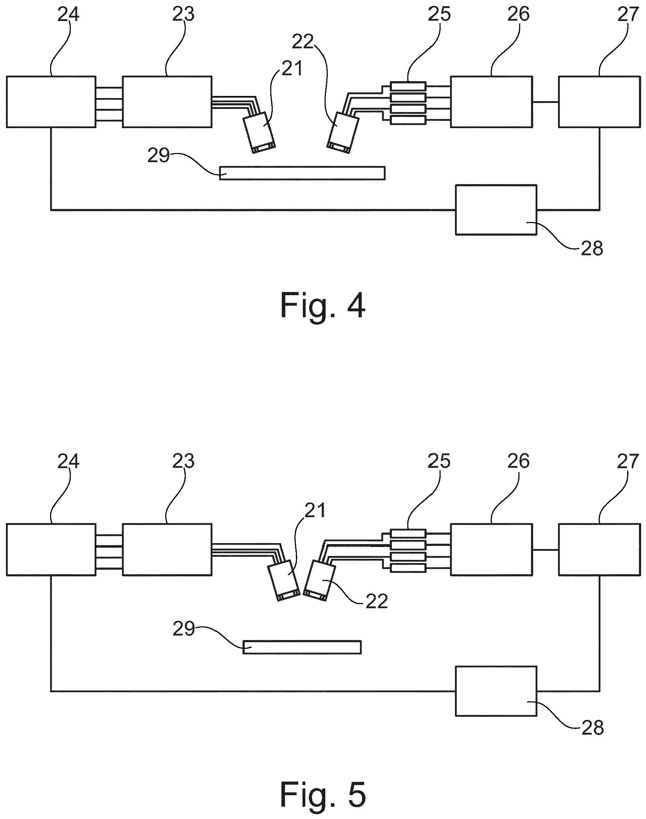

Figur 4 zeigt den prinzipiellen Aufbau des Ultraschallsystems 20 wie in Figur 3, jedoch in der Pitch-Catch-Konfiguration. Multikanalsender 21 und Multikanalempfänger 22 befinden sich auf der gleichen Seite des Prüflings 29. Ultraschallwellen in unendlich ausgedehnten Medien können sich als sog. Longitudinal-, Long-·oder Druckwellen ausbreiten, bei denen die Schwingungsrichtung parallel zur Ausbreitungsrichtung der Welle liegt, oder als Transversal-, Scher-oder Schubwellen, bei denen das Material senkrecht zur Ausbreitungsrichtung schwingt. Transversalwellen können nur in festen Körpern auftreten, da flüssige oder gasförmige Stoffe keine Scherkräfte aufnehmen können. Die Begrenzung eines Werkstoffs ermöglicht weitere charakteristische Wellenmoden wie Dehn-, Biege und Oberflächenwellen, sog. Stab-, Platten·oder Lambwellen. Mit der Pitch-Catch-Konfiguration können Materialfehler anhand der Änderung charakteristischer Wellenmoden identifiziert werden.

Figur 5 zeigt den prinzipiellen Aufbau des Ultraschallsystems 20 wie in Figur 3, jedoch für Reflexionsbetrieb, Multikanalsender 21 und Multikanalempfänger 22 befinden sich auf der gleichen Seite des Prüflings 29. Vom Multikanalsender werden Ultraschallwellen in den Prüfling eingekoppelt. Gemessen und ausgewertet werden von der Oberfläche des Prüflings und/oder dem Material bzw. der inneren Struktur des Prüflings reflektierte Ultraschallsignale.

**Liste der Bezugszeichen**

| | |
|---|---|
| 10 | Multielementultraschallwandler |
| 11, 12, 13 | Elektroden, Wandler, Sendewandler, Empfangswandler |
| 14 | Dämpfungskörper |
| 15 | piezoelektrisches Material |
| 16 | Elektrode |
| 17 | Anpassschicht |
| 20 | Ultraschallsystem |
| 21 | Sender, Multikanalsender |
| 22 | Empfänger, Multikanalempfänger |
| 23 | Digitalverstärker |
| 24 | Signalprozessor |
| 25 | Vorverstärker |
| 26 | Verstärker |
| 27 | Analog-Digitalwandler |
| 28 | Recheneinheit |
| 29 | Prüfling |

## Patentansprüche

1. Ultraschallsystem (20), insbesondere Luftultraschallsystem, das einen Ultraschallwandler, Sende-Empfangselektronik mit Digitalisierer (27) und eine Recheneinheit (28) mit Ansteuer- und Auswertesoftware aufweist, wobei der Ultraschallwandler ein Multielementultraschallwandler (10) ist und mindestens zwei Sendeelemente und/oder Empfangselemente (11, 12, 13) aufweist, **dadurch gekennzeichnet, dass** die Sendeelemente und/oder Empfangselemente (11, 12, 13) so gestaltet sind, dass sie mit unterschiedlichen Frequenzen ansteuerbar sind.

2. Ultraschallsystem (20) nach Anspruch 1, **dadurch gekennzeichnet, dass** die Sendeelemente und/oder Empfangselemente (11, 12, 13) kreisförmig und/oder ringförmig gestaltet sind.

3. Ultraschallsystem (20) nach einem der Ansprüche 1 oder 2, **dadurch gekennzeichnet, dass** die Sendeelemente und/oder Empfangselemente (11, 12, 13) so gestaltet sind, dass durch das Ansteuern mehrerer Einzelelemente mit unterschiedlichen Frequenzen eine Erhöhung der Bandbreite des Multielementultraschallwandlers (10) ermöglicht wird.

4. Ultraschallsystem (20) nach einem der Ansprüche 1 bis 3, wobei die Sendeelektronik einen Signalprozessor (24), einen digitalen Verstärker (23) und einen Sender (21) aufweist und die Empfangselektronik einen Empfänger (22), einen Vorverstärker (25), einen Verstärker (26) und einen analog-/digital (a/d)-Wandler (27) aufweist, **dadurch gekennzeichnet, dass** der Sender (21) ein Multikanalsender (21) und der Empfänger (22) ein Multikanalempfänger (22) ist, wobei der Sender (21) und der Empfänger (22) mindestens so viele Kanäle aufweisen wie der Multielementultraschallwandler (10).

5. Ultraschallsystem (20) nach einem der Ansprüche 1 bis 4, wobei Sender (21) und Empfänger (22) in einem Prüfkopf enthalten sind, oder wobei Sender (21) und Empfänger (22) getrennt voneinander als separate Prüfköpfe ausgeführt sind.

6. Ultraschallsystem (20) nach einem der Ansprüche 1 bis 5, wobei Sender (21) und Empfänger (22) so angeordnet sind, dass die Ultraschallprüfung im Reflexionsbetrieb durchführbar ist, oder wobei Sender (21) und Empfänger (22) so angeordnet sind, dass die Ultraschallprüfung im Durchschallungsbetrieb durchführbar ist, oder wobei Sender (21) und Empfänger (22) in einer Pitch-Catch Konfiguration angeordnet sind.

7. Ultraschallsystem (20) nach einem der Ansprüche 4 bis 6, **dadurch gekennzeichnet dass** der Multikanalsender (21) so gestaltet ist, dass mit einer sehr hohen zeitlichen Genauigkeit alle Kanäle synchron ansteuerbar sind, wobei jeder Kanal mit einer anderen Frequenz ansteuerbar ist.

8. Ultraschallsystem (20) nach einem der Ansprüche 4 bis 7, **dadurch gekennzeichnet dass** durch die Kombination des Multielementultraschallwandlers (10) mit dem Multikanalsender (21) und dem Multikanalempfänger (22) die Vergrößerung der Bandbreite des Ultraschallsignals und dadurch die Durchführung einer einzigen Messung ermöglicht wird.

9. Verfahren zur Breitbandmessung von Prüfkörpern mit Multielementultraschallschallwandlern (10), insbesondere Multielement-Luftultraschallschallwandlern, wobei in dem Verfahren ein Ultraschallsystem (20) nach einem der Ansprüche 1 bis 8 verwendet wird, **dadurch gekennzeichnet, dass** das Verfahren die Schritte aufweist:
• Ansteuern der Sendeelemente (11, 12, 13) des Multielementultraschallwandlers (10) mit unterschiedlichen Frequenzen;
• Aussenden eines breitbandigen Ultraschallsignals durch die Sendeelemente (11, 12, 13) des Multielementultraschallwandlers (10);
• Empfangen/Messen des breitbandigen Ultraschallsignals durch die Empfangselemente des Multielementultraschallwandlers und Bildung von Einzelspektren;
• Analoge Vorverarbeitung, Verstärkung und Digitalisierung der von den Empfangselementen des Multielementultraschallwandlers (10) empfangenen Ultraschallsignale;
• Auswertung der empfangenen Ultraschallsignale;
**dadurch gekennzeichnet, dass** mittels der analogen Vorverarbeitung, Verstärkung und Digitalisierung der von den Empfangselementen des Multielementultraschallwandlers empfangenen Ultraschallsignale ein Spektrum gebildet wird, dass sich aus der Summe der überlagerten Einzelspektren der einzelnen Elemente des Multielementultraschallwandlers (10) ergibt.

10. Verfahren nach Anspruch 9 oder Ultraschallsystem nach einem der Ansprüche 1 bis 8, **dadurch gekennzeichnet, dass** durch die Sendeelemente (11, 12, 13) des Multielementultraschallwandlers (10) Ultraschallsignale mit verschiedenen Frequenzen im Bereich von 20 kHz und 10 MHz ausgesendet werden.

11. Verfahren nach einem der Ansprüche 9 oder 10 oder Ultraschallsystem (20) nach einem der Ansprüche 1 bis 8, **dadurch gekennzeichnet, dass** der Multielementultraschallwandler (10) mindestens 2, 3, 4, 5 oder mehr Sendeelemente und/oder Empfangselemente (11, 12, 13) aufweist und mindestens 2, 3, 4, 5 oder mehr Ultraschallsignale mit unterschiedlichen Frequenzen aussendet und empfängt.

12. Verfahren nach einem der Ansprüche 9 bis 11 oder Ultraschallsystem (20) nach einem der Ansprüche 1 bis 8, **dadurch gekennzeichnet, dass** die Kompositmaterialien, aus denen die aktiven Einzelelemente (11, 12, 13), bestehen, eine unterschiedliche Geometrie, insbesondere Dicke aufweisen, und dass die Frequenz des durch ein Sendeelement (11, 12, 13) ausgesendeten Ultraschallsignals durch die Geometrie des Kompositmaterials, aus dem das Sendeelement (11, 12, 13) besteht, bestimmt wird.

13. Verfahren nach einem der Ansprüche 9 bis 12 oder Ultraschallsystem (20) nach einem der Ansprüche 1 bis 8, **dadurch gekennzeichnet, dass** Toleranzen in der Empfangselektronik mit Hilfe von Kalibriermessungen bestimmt und mittels einer Software bei der analogen Vorverarbeitung, Verstärkung und Digitalisierung der von den Empfangselementen des Multielementultraschallwandlers (10) empfangenen Ultraschallsignale korrigiert werden.

14. Verfahren nach einem der Ansprüche 9 bis 13 oder Ultraschallsystem (20) nach einem der Ansprüche 1 bis 8, **dadurch gekennzeichnet, dass** mittels einer Fehlerklassifizierung die Art und die Schwere des Materialfehlers erkannt werden.

15. Verwendung des Verfahrens oder des Ultraschallsystems (20) nach einem der Ansprüche 1 bis 14 zur Oberflächencharakterisierung und/oder zur Prüfung von Kompositmaterialien, Klebeverbindungen und Materialverbunden auf Fehler, wie Lufteinschlüsse, Delaminationen, Klebefehler, Verunreinigungen, Kanäle, Risse und Kissing Bonds.
